# DEMANDE DE BREVET EUROPEEN

(11) **EP 3 779 610 A1**
(43) Date de publication de la demande: **17.02.2021**
(21) Numéro de dépôt: 19191930.7
(22) Date de dépôt: 15.08.2019
(51) Int. Cl.: G04C 3/14, H02P 8/02

(54) **MONTRE ÉLECTROMÉCANIQUE**

(71) Demandeur: ETA SA Manufacture Horlogère Suisse, 2540 Grenchen (CH)
(72) Inventeur: BESUCHET, Romain, 1400 Yverdon-les-Bains (CH)
(74) Mandataire: ICB SA

(57) **Abrégé**

La montre électromécanique (2) de l'invention comprend un moteur électromécanique (4) couplé mécaniquement à un affichage analogique (AD) et formé par deux bobines (B1, B2) traversées par le circuit magnétique (10) du stator. Une première des deux bobines est reliée à un circuit de détection de tension (CD1, CD2) agencé pour pouvoir détecter une tension induite éventuelle dans cette première bobine durant des intervalles de temps intervenant, dans un mode de fonctionnement pas-à-pas du moteur, entre des impulsions motrices et notamment détecter si un pas intempestif est effectué par le rotor (18) au cours de ces intervalles de temps. La montre électromécanique comprend au moins un interrupteur (T1, T2, T3) qui est commandé par un circuit électronique de commande (CEC) de manière à court-circuiter la deuxième bobine durant chacun desdits intervalles de temps, pour ainsi retenir passivement le rotor dans la position de repos dans laquelle il se trouve momentanément entre les impulsions motrices.

## Description

### Domaine technique

La présente invention concerne les montres électromécaniques qui comprennent un affichage analogique et qui sont susceptibles de subir en cas de chocs des déplacements intempestifs de cet affichage analogique. En particulier, la présente invention concerne un système permettant de rendre de telles montres électromécaniques plus robustes en cas de chocs tout en permettant de détecter des pas intempestifs, c'est-à-dire des pas non commandés.

### Arrière-plan technologique

La problématique du risque de pas intempestifs en cas de chocs pour les montres électromécaniques est connue depuis longtemps et diverses solutions ont été apportées à ce problème.

Le document EP 1 693 720 propose un système dans lequel il est prévu de détecter un impact subi par une montre électromécanique au moyen d'une unité de détection d'impacts qui est reliée aux extrémités de la seule bobine du moteur pas-à-pas durant les intervalles de temps entre les impulsions motrices fournies au moteur. En effet, lorsqu'une aiguille bouge lors d'un choc, le mouvement du rotor à aimant permanent qui en résulte engendre un signal électrique dans la bobine que peut détecter l'unité de détection d'impacts. Suite à la détection d'un mouvement intempestif du rotor via le signal électrique engendré dans la bobine, il est prévu d'envoyer une impulsion électrique de blocage du rotor de manière à éviter que le moteur pas-à-pas effectue un ou plusieurs pas intempestifs. Cette solution présente plusieurs inconvénients. Premièrement, relier la bobine à un circuit de détection d'un signal électrique induit dans la bobine par un mouvement du rotor nécessite de conserver une impédance très élevée pour la bobine, dans laquelle aucun courant ne peut dès lors circuler, ne permettant donc pas de bénéficier de l'amortissement dû à ce courant durant les intervalles de temps intervenant entre les impulsions motrices. Dans cet état, le moteur électromécanique est donc vulnérable à des chocs ou autres accélérations brusques que peut subir la montre, même s'il peut alors détecter de tels événements lorsque ces derniers engendrent des mouvements intempestifs de l'affichage analogique et donc du rotor qui est relié mécaniquement à cet affichage analogique. Deuxièmement, le système prévoit de détecter si la montre subit un choc et ensuite de réagir à cette information en générant une impulsion de blocage du rotor. Ainsi, il est possible que la réaction soit trop tardive et/ou insuffisante pour empêcher que le moteur effectue au moins un pas non désiré. De plus, si l'impulsion de blocage ne parvient pas à empêcher un pas intempestif, cette impulsion de blocage engendre alors à son tour un second pas non désiré. Finalement, la génération d'impulsions de blocage peut consommer beaucoup d'énergie électrique. Si le seuil de détection est prévu relativement bas pour assurer une détection rapide et une réaction dans le meilleur délai, des impulsions de blocage sont alors générées souvent de sorte que l'autonomie de la montre électromécanique est diminuée.

Le document EP 3 171 231 décrit également un système du type proposé dans le document cité ci-avant. Il est prévu ici un circuit de détection de chocs qui est connecté à au moins une borne électrique du moteur électromécanique de manière à pouvoir détecter une tension induite dans la seule bobine du moteur pas-à-pas en cas de chocs subi par la montre qui engendrent un déplacement intempestif de l'affichage analogique, c'est-à-dire d'au moins un indicateur en lien cinématique avec le moteur pas-à-pas. Il est aussi prévu ici d'engendrer une impulsion de blocage suite à la détection d'un choc. Cette réalisation soulève les mêmes problèmes que ceux décrits en lien avec le document cité précédemment. On notera encore qu'un circuit de détection de chocs peut aussi être agencé pour détecter si un pas voulu n'a pas eu lieu, de sorte à pouvoir alors engendrer un pas de rattrapage.

On notera qu'il a été proposé un dispositif permettant de compter des pas intempestifs du moteur pas-à-pas ainsi que le sens de rotation du rotor lors de tels pas intempestifs. Suite à un choc ayant engendré un ou plusieurs pas non désirés du rotor, il est possible de corriger l'erreur engendrée dans l'affichage analogique de manière appropriée, soit par des pas de correction, soit, lorsque le sens de pas intempestifs est celui prévu pour l'entrainement de l'affichage analogique, en inhibant un nombre d'impulsions motrices correspondant au nombre de pas intempestifs via la commande du moteur qui engendre périodiquement des impulsions motrices pour entraîner l'affichage analogique. Avec une telle solution, il n'est plus nécessaire de bloquer électriquement le rotor par un signal électrique lors de la détection d'un choc et donc d'assurer une réaction suffisamment rapide et forte du circuit électronique de la montre. Cette solution présente l'avantage de ne pas limiter les balourds d'indicateurs formant l'affichage analogique. Cependant, ces moyens de détection de chocs et de comptabilisation de pas intempestifs via la détection d'un signal électrique induit dans la bobine du moteur empêche que le moteur pas-à-pas puisse passivement, de manière « naturelle », s'opposer à de tels pas intempestifs en cas de chocs ; ce qui augmente la consommation électrique de la montre électromécanique.

### Résumé de l'invention

Le but de la présente invention est de remédier aux problèmes techniques susmentionnés.

A cet effet, l'invention concerne une montre électromécanique dont le moteur électromécanique est formé par un stator, comprenant un circuit magnétique et une première bobine traversée par ce circuit magnétique, et par un rotor muni d'un aimant permanent couplé au circuit magnétique, ce circuit magnétique définissant au moins une position d'énergie minimale pour le rotor qui est couplé mécaniquement à l'affichage analogique de la montre. La première bobine est agencée de manière à pouvoir, dans un mode de fonctionnement pas-à-pas du moteur électromécanique, être reliée à un circuit de détection de tension qui est agencé pour détecter une tension induite éventuelle dans cette première bobine durant des intervalles de temps intervenant entre les impulsions motrices fournies au moteur et notamment pour détecter si un pas non commandé est effectué par le rotor au cours de ces intervalles de temps. Ensuite, le moteur électromécanique comprend une deuxième bobine traversée par le circuit magnétique. De plus, la montre électromécanique comprend au moins un interrupteur qui est commandé par un circuit de commande de manière à court-circuiter la deuxième bobine durant au moins la majeure partie de chacun desdits intervalles de temps.

Grâce aux caractéristiques de la montre électromécanique selon l'invention, on conserve une détection de pas intempestifs éventuels du rotor lors d'un choc via la première bobine et en plus on bloque passivement le rotor via la deuxième bobine qui est court-circuitée en dehors des impulsions motrices. Ainsi, le nombre de pas intempestifs éventuels est fortement diminué en cas de choc et, si un tel pas intempestif devait néanmoins avoir lieu lors d'un choc, sa détection reste assurée ; ce qui permet, d'une part, de corriger ensuite l'erreur engendrée pour l'affichage analogique et, d'autre part, d'augmenter encore la résistance du moteur au choc en générant une impulsion de blocage via la première bobine comme proposé dans l'art antérieur.

### Brève description des figures

L'invention sera décrite ci-après de manière plus détaillée à l'aide des dessins annexés, donnés à titre d'exemples nullement limitatifs, dans lesquels :
- La Figure 1 représente schématiquement un mode de réalisation d'une montre électromécanique selon l'invention, et
- La Figure 2 est un tableau donnant divers états d'un circuit de trois interrupteurs et les configurations résultantes pour les deux bobines formant le stator du moteur électromécanique de la montre de la Figure 1.

### Description détaillée de l'invention

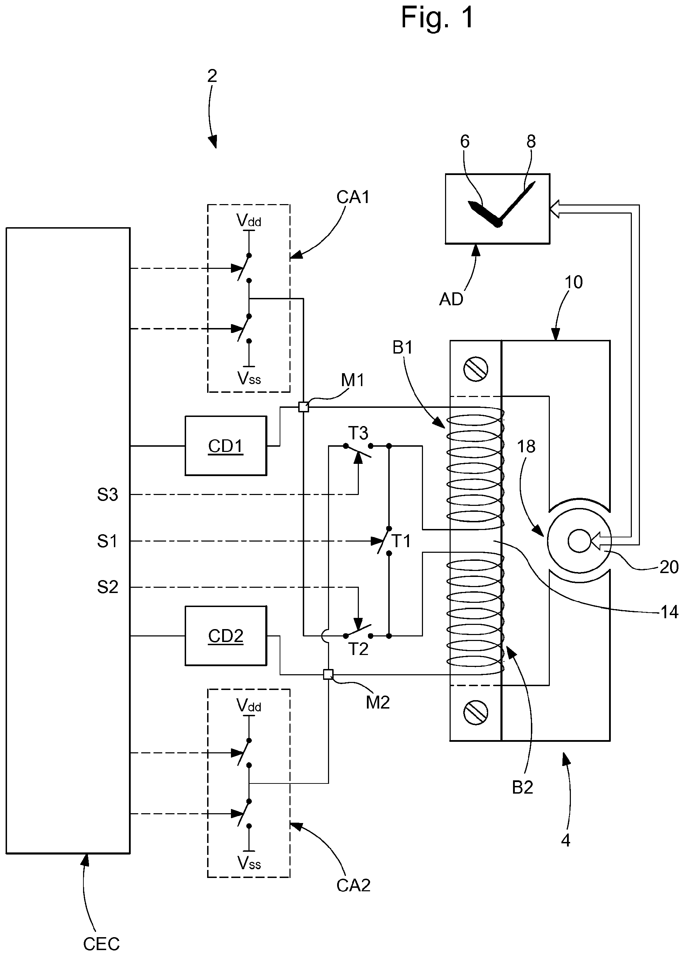

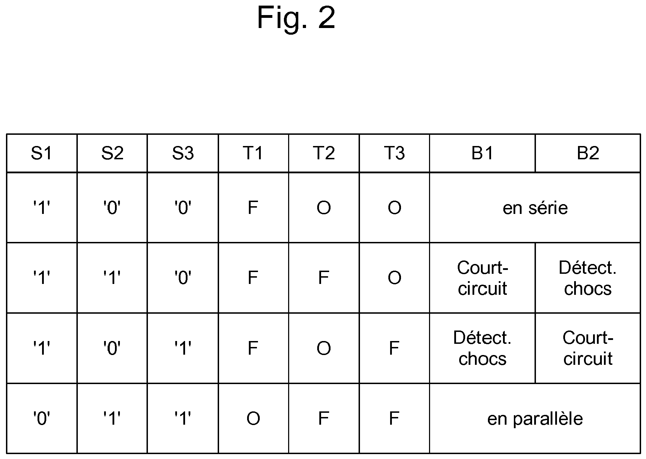

En référence aux Figures 1 et 2, on décrira par la suite un mode de réalisation préféré d'une montre électromécanique 2 selon l'invention.

La montre électromécanique 2 comprend :
- un affichage analogique AD comprenant notamment une aiguille des heures 6 et une aiguille des minutes 8,
- un moteur électromécanique 4 formé d'un stator, comprenant un circuit magnétique 10 et une bobine B1 traversée par un noyau 14 formant le circuit magnétique, et d'un rotor 18 muni d'un aimant permanent 20 couplé magnétiquement au circuit magnétique, ce rotor étant couplé mécaniquement à l'affichage analogique,
- un circuit d'alimentation, représenté en deux parties CA1 et CA2, pour alimenter le moteur électromécanique, les deux parties du circuit d'alimentation étant reliées respectivement à une première borne électrique M1 et une deuxième borne électrique M2 du moteur électromécanique,
- un circuit électronique de commande du moteur électromécanique, ce circuit électronique de commande CEC étant agencé de manière que, dans un mode de fonctionnement pas-à-pas du moteur électromécanique, le circuit d'alimentation engendre sur commande des impulsions motrices présentant entre elles des intervalles de temps non nuls, et
- un circuit de détection de tension présentant, dans la variante représentée, deux parties CD1 et CD2 reliées respectivement aux première et deuxième bornes électriques M1 et M2, ce circuit de détection étant agencé pour pouvoir détecter une tension induite dans la bobine B1 durant lesdits intervalles de temps et notamment détecter, sur la base de cette tension induite, si un pas intempestif est effectué par le rotor 18 au cours de ces intervalles de temps.

Le moteur électromécanique 4 est du type pas-à-pas, le circuit magnétique 10 définissant pour le rotor 18 au moins une position d'énergie minimale vers laquelle le rotor, lorsqu'il est en mouvement, tourne en l'absence d'alimentation électrique et dans laquelle il demeure en l'absence d'alimentation électrique, c'est-à-dire en l'absence d'impulsions motrices fournies sur commande par le circuit d'alimentation. Chaque position d'énergie minimale définit une position stable pour le rotor en l'absence d'alimentation électrique, nommée aussi 'position de repos'. Ainsi, il est possible de détecter, via la tension induite dans la bobine B1, durant les intervalles de temps entre les impulsions motrices si le rotor tourne depuis une position de repos dans laquelle il se trouve momentanément.

Plusieurs documents de l'art antérieur, notamment ceux cités dans l'arrière-plan technologique, décrivent diverses réalisations pour le circuit de détection d'un signal électrique induit dans une bobine du moteur pas-à-pas d'une montre électromécanique et pour le traitement du signal électrique induit détecté en vue de déterminer si au moins un pas intempestif, c'est-à-dire non commandé, a eu lieu entre deux impulsions motrices destinées à faire fonctionner le moteur pas-à-pas. Ces documents de l'art antérieur décrivent également, comme indiqué précédemment, diverses réactions possibles pour éviter qu'un pas intempestif soit effectué dès qu'une rotation non commandée est détectée et/ou pour compter des pas intempestifs et le sens de rotation correspondant de manière à corriger ensuite l'erreur qui en résulte pour l'affichage analogique. Ces diverses réalisations et réactions possibles peuvent être implémentées dans les circuits CA1 & CA2 de détection d'une tension induite dans une bobine et dans le circuit électronique de commande CEC. On notera que, dans une variante, seule une des deux bornes électriques M1, M2 est reliée au circuit de détection d'une tension induite, lequel comprend alors une seule partie CD1 ou CD2.

Selon l'invention, le stator du moteur électromécanique comprend en outre une bobine B2 traversée par le circuit magnétique 10, en particulier par le noyau 14 comme représenté à la Figure 1. Ensuite, de manière générale, la montre électromécanique 2 comprend au moins un interrupteur qui est commandé par le circuit électronique de commande CEC de manière à court-circuiter la bobine B2 durant au moins la majeure partie de chacun desdits intervalles de temps dans le mode de fonctionnement pas-à-pas du moteur électromécanique 4. On notera que, dans une autre configuration du moteur électromécanique, la bobine B2 peut être traversée par un deuxième noyau du circuit magnétique. Comme l'aimant permanent du rotor est couplé magnétiquement au circuit magnétique, cet aimant permanent est couplé magnétiquement aux deux bobines B1 & B2 par les deux noyaux respectifs.

Dans le mode de réalisation préféré décrit en référence aux figures, la montre électromécanique comprend une pluralité d'interrupteurs T1, T2 et T3 qui sont agencés et commandés par le circuit électronique de commande CEC de manière que la bobine B1 et la bobine B2 peuvent être agencées durant les impulsions motrices soit en série, soit en parallèle. De plus, durant lesdits intervalles de temps entre les impulsions motrices, il est possible de soit court-circuiter la bobine B2 et de détecter la tension dans la bobine B1, soit de court-circuiter la bobine B1 et de détecter la tension dans la bobine B2. Le tableau donné à la Figure 2 fournit pour divers états utiles des trois interrupteurs T1, T2 et T3, commandés respectivement par trois signaux digitaux S1, S2 et S3 générés par le circuit électronique de commande CEC, les configurations correspondantes des bobines B1 et B2. Ainsi, dans l'objet revendiqué, la première bobine reliée durant lesdits intervalles de temps au circuit de détection de tension est soit la bobine B1, soit la bobine B2, et la deuxième bobine court-circuitée lors de ces intervalles de temps est respectivement soit la bobine B2, soit la bobine B1. Un interrupteur fermé (noté 'F') est passant alors qu'un interrupteur ouvert (noté 'O') est non passant.

La configuration des bobines B1 et B2 en série est utilisée de préférence lors de l'application des impulsions motrices au moteur électromécanique dans un mode de fonctionnement pas-à-pas normal, cette configuration en série permettant de minimiser l'énergie électrique consommée. La configuration des bobines B1 et B2 en parallèle est utilisée de préférence lors de l'application d'impulsions motrices au moteur électromécanique dans un mode de fonctionnement accéléré, c'est-à-dire à relativement haute vitesse, notamment lors d'une mise à l'heure ou d'une opération de correction de l'affichage analogique AD. On remarquera qu'on peut aussi prévoir, si souhaité, de n'alimenter qu'une seule des deux bobines lors de certaines impulsions motrices fournies au moteur électromécanique.

## Revendications

1. Montre électromécanique (2) comprenant :
- un affichage analogique (AD),
- un moteur électromécanique (4) formé d'un stator, comprenant un circuit magnétique (10) et une bobine (B1) traversée par ce circuit magnétique, et d'un rotor (18) muni d'un aimant permanent (20) couplé au circuit magnétique, ce circuit magnétique définissant au moins une position d'énergie minimale pour le rotor, ce rotor étant couplé mécaniquement à l'affichage analogique,
- un circuit d'alimentation (CA1, CA2) pour alimenter le moteur électromécanique, ce circuit d'alimentation étant relié à une première borne électrique (M1) et une deuxième borne électrique (M2) de ce moteur électromécanique,
- un circuit électronique de commande du moteur électromécanique, ce circuit électronique de commande (CEC) étant agencé de manière que, dans un mode de fonctionnement pas-à-pas du moteur électromécanique, le circuit d'alimentation engendre sur commande des impulsions motrices présentant entre elles des intervalles de temps non nuls, et
- un circuit de détection de tension (CD1, CD2) agencé pour pouvoir détecter une tension induite dans ladite bobine (B1) durant lesdits intervalles de temps et notamment détecter, sur la base de cette tension induite, si un pas est effectué par le rotor (18) au cours de ces intervalles de temps ; **caractérisée en ce que** ladite bobine est une première bobine (B1) et le stator du moteur électromécanique comprend en outre une deuxième bobine (B2) traversée par ledit circuit magnétique (10); et **en ce que** la montre électromécanique comprend au moins un interrupteur (T1, T2, T3) qui est commandé par le circuit électronique de commande (CEC) de manière à court-circuiter la deuxième bobine durant au moins la majeure partie de chacun desdits intervalles de temps dans le mode de fonctionnement pas-à-pas du moteur électromécanique.

2. Montre électromécanique selon la revendication 1, **caractérisée en ce qu'**elle comprend une pluralité d'interrupteurs (T1, T2, T3) agencés et commandés par le circuit électronique de commande (CEC) de manière que les première et deuxième bobines (B1 & B2) peuvent être agencées soit en série, soit en parallèle durant les impulsions motrices.
